# DEMANDE DE BREVET EUROPEEN

(11) **EP 0 755 049 A1**
(43) Date de publication de la demande: **22.01.1997**
(21) Numéro de dépôt: 96201961.8
(22) Date de dépôt: 11.07.1996
(51) Int. Cl.: G11B 5/54, G11B 19/20, H02P 6/08

(54) **Circuit intégré de commande d'un disque de stockage d'informations**

(30) Priorité: 19.07.1995 FR 9508734
(71) Demandeur: PHILIPS COMPOSANTS ET SEMICONDUCTEURS, 92150 Suresnes (FR); Philips Electronics N.V., 5621 BA Eindhoven (NL)
(72) Inventeur: Hemon, Erwan, Société Civile S.P.I.D., 75008 Paris (FR)
(74) Mandataire: Caron, Jean

(57) **Abrégé**

Circuit qui alimente par trois branches U, V, W de 2 éléments interrupteurs en série (S1 - S6) un moteur de rotation du disque, et par deux branches (P, N) de 2 éléments interrupteurs (S7 - S10) un actuateur de déplacement des têtes de lecture - écriture, et qui comporte des dispositifs d'isolement (S11, S12) pour permettre une alimentation par le moteur de rotation fonctionnant en générateur, pour un retrait des têtes en position de sécurité lors d'une coupure de tension d'alimentation.

L'un des dispositifs d'isolement (S11) est connecté entre une première borne d'alimentation (A1) et les extrémités réunies des branches U et V, l'autre (S12) est connecté entre une deuxième borne d'alimentation (A2) et les extrémités réunies des branches W et N. L'extrémité de la branche P est directement connectée à une troisième borne d'alimentation (A3). La connexion des autres extrémités des branches mentionnées vers une tension de référence (10) est agencée avec des bornes de connexion (CX1, CX2, CR) pour que les éléments interrupteurs (S1 à S10) soient connectés les uns aux autres en cascade.

## Description

La présente invention concerne un circuit intégré de commande d'un appareil de stockage d'informations, à disque rotatif, circuit assurant entre-autres à partir d'une tension d'alimentation et d'une tension de référence (masse) une commande séquentielle des phases d'un moteur triphasé sans balais, qui entraîne le disque en rotation, ainsi qu'une commande de positionnement d'un actuateur de déplacement de tête(s) de lecture-écriture du disque, circuit comportant une pluralité d'éléments interrupteurs de puissance distribués à la périphérie d'une pastille de semi-conducteur sur laquelle est intégré ledit circuit, éléments disposés de manière à former :
trois branches U, V, W, chacune de deux éléments interrupteurs en série, qui alimentent par les noeuds intermédiaires aux dits éléments de ces branches, chacune des phases du moteur de rotation,
et deux branches P et N chacune de deux éléments interrupteurs en série, qui alimentent par les noeuds intermédiaires aux dits éléments de ces branches, l'actuateur de déplacement de têtes,
lequel circuit est muni en outre d'au moins un dispositif d'isolement connecté entre la tension d'alimentation et une branche d'éléments interrupteurs, pour permettre un retrait des têtes en position de sécurité en cas de coupure de la tension d'alimentation, l'actuateur de déplacement des têtes étant alors alimenté à partir de l'énergie électrique fournie par le moteur de rotation du disque.

Un circuit intégré destiné à assurer une commande de l'alimentation en puissance des moteurs d'un disque dur est notamment connu de l'article de R. K. Williams et al. ayant pour titre "A Fully Integrated HDD Power IC with Novel Head Retract Feature" publié sous la référence catalogue IEEE n° 94CH3377-9, compte-rendu de session n°8, article 8.4, du 6ème Symposium International sur les Dispositifs Semi-conducteurs de Puissance et Circuits Intégrés, tenu à Davos, Suisse, 31 mai - 2 juin 1994.

Dans cet article se trouve décrit plus spécialement un circuit de commande fonctionnant sous une tension d'alimentation de 5 Volts. Un circuit de commande réalisé sous forme intégrée permet de simplifier la construction de l'appareil de stockage, d'en améliorer les performances, d'en réduire les dimensions et le coût. Les appareils de stockage d'information à disques rotatifs tels que les disques magnétiques ou les disques à lecture optique présentent une évolution technique clairement orientée vers un accroissement de vitesse de rotation du disque, pour augmenter le taux de transfert de données à mémoriser ou à relire, et en faveur d'une diminution du temps nécessaire aux têtes pour accéder à leur position de travail. En conséquence, il est demandé que le circuit de commande de puissance de l'appareil puisse débiter des courants de crête toujours plus élevés, actuellement de l'ordre de l'ampère.

Dans le but d'optimiser la puissance à dissiper, un circuit de commande doit être conçu de manière à minimiser le plus possible les résistances indésirables en série avec l'alimentation des moteurs de l'appareil. Parmi ces résistances indésirables figurent la résistance interne des transistors de puissance utilisés, et la résistance des liaisons internes du circuit intégré.

Les pistes conductrices aboutissant aux plages de contact, elles-mêmes raccordées aux broches portées par le boîtier du circuit, présentent, en fonction de leur longueur, une résistance électrique non négligeable et qui doit être réduite à une valeur minimale. On est donc conduit à placer les éléments interrupteurs de puissance à proximité immédiate des plages de contact, et donc, à la périphérie de la pastille de semi-conducteur.

La présente invention vise à proposer un circuit de commande dans lequel tous les éléments interrupteurs de puissance puissent être disposés de manière optimale pour obtenir une réduction des résistances parasites indésirables. En particulier ce circuit devrait permettre une distribution de ces éléments telle que parmi les différents trajets d'alimentation en puissance utilisés, aucun d'eux ne présente une résistance nettement plus élevée que celle d'un autre trajet d'alimentation.
L'invention prévoit une disposition de circuit particulière permettant de satisfaire à ces exigences, au moins dans une large mesure.

En effet, selon la présente invention, un circuit intégré tel que défini dans la paragraphe introductif, est caractérisé en ce que :
un onzième élément interrupteur fonctionnant en tant que dispositif d'isolement est connecté entre d'une part une première borne de tension d'alimentation et d'autre part les extrémités réunies des deux branches dites U et V,
un douzième élément interrupteur fonctionnant en tant que dispositif d'isolement est connecté entre une deuxième borne de tension d'alimentation et une extrémité de la branche dite W, réunie à une extrémité de la branche dite N,
une troisième borne de tension d'alimentation est connectée directement à une extrémité de la branche restante, dite branche P, l'autre extrémité de la branche N et l'autre extrémité de la branche P sont connectées ensemble à une borne de référence du circuit,
l'autre extrémité de la branche dite U est connectée à une première borne de connexion du circuit tandis que l'autre extrémité de la branche V et l'autre extrémité de la branche W sont connectées ensemble à une deuxième borne de connexion du circuit, lesquelles première et deuxième bornes de connexion sont destinées à être soumises à une tension voisine de la tension de référence.

L'invention met en oeuvre en tant que dispositifs d'isolement des éléments semi-conducteurs actifs de type interrupteur dont la résistance est faible à l'état passant ce qui permet ainsi de réduire la chute de tension dans ces dispositifs. Des dispositifs d'isolement sont en effet pratiquement indispensables pour éviter que, lors du retrait des têtes en position de sécurité, un couplage ne se produise en direction de la ligne de tension d'alimentation qui se trouve alors à une tension nulle. Comme cela a déjà été mentionné, on désire utiliser à ce moment-là la force électromotrice développée sur les enroulements du moteur de rotation pour alimenter l'actuateur de déplacement des têtes le temps nécessaire à leur retrait.

L'invention tire profit du fait qu'un dispositif d'isolement n'est pas nécessaire à l'une des branches d'alimentation de l'actuateur de déplacement des têtes : celle qui devra fournir la tension de référence lors du retrait des têtes en position de sécurité. Ainsi est-il prévu une connexion directe de la branche appelée P, à une borne d'alimentation, dite troisième borne d'alimentation. Conformément à l'invention, la deuxième borne d'alimentation est connectée à la fois à l'autre branche, dite branche N, d'alimentation de l'actuateur et à l'une des branches d'alimentation du moteur de rotation, c'est-à-dire la branche W. Par cette disposition, les éléments interrupteurs de puissance peuvent être distribués sans discontinuité le long de la périphérie de la pastille semi-conductrice comme cela sera montré plus en détail par la suite.

Selon une variante préférée de mise en oeuvre de l'invention, le noeud reliant le onzième élément interrupteur aux extrémités des branches dites U et V est connecté à une troisième borne de connexion du circuit et le noeud reliant le douzième élément interrupteur aux branches dites W et N est connecté à une quatrième borne de connexion du circuit laquelle est destinée à être connectée à la troisième borne de connexion par une liaison externe au circuit intégré.

De cette manière l'alimentation en courant des branches en question s'effectue en parallèle à partir des première et deuxième bornes d'alimentation à travers deux éléments interrupteurs en parallèle faisant office de dispositifs d'isolement. Une telle alimentation en parallèle réduit les exigences de courant maximal auxquelles sont soumis les éléments qui débitent en parallèle. On peut ainsi réduire les dimensions de ces éléments, si on le désire.

Pour alimenter l'actuateur de déplacement des têtes pendant le retrait de celles-ci en position de sécurité, la branche dite P doit fournir par son point intermédiaire une tension égale à la tension de référence ce qui est obtenu simplement en forçant à la conduction celui des deux éléments interrupteurs de cette branche qui convient. D'autre part, la branche N doit alors fournir un courant provenant des enroulements du moteur de rotation, fonctionnant en générateur. A cet effet, on peut appliquer une commande de mise en conduction de celui des éléments interrupteurs de la branche N qui est adjacent à l'extrémité de la branche W. Toutefois cette solution impose de disposer de deux commandes différentes de cet élément selon que l'appareil est en marche normale ou en phase de retrait des têtes après coupure de l'alimentation.

Aussi, dans une variante de l'invention, avantageuse par sa simplicité, le noeud de connexion entre le douzième élément interrupteur et les extrémités réunies des branches W et N est relié au noeud intermédiaire aux éléments de la branche dite N via le trajet de courant d'un élément interrupteur supplémentaire soumis à une commande déterminant sa conduction uniquement pendant le retrait des têtes et jusqu'à l'immobilisation du disque.

Bien que les éléments interrupteurs de puissance puissent être réalisés sous différentes formes, ceux-ci sont de préférence constitués de transistors de type DMOS à canal N. Ce type de transistor permet de satisfaire au mieux les exigences sévères de ce type d'application notamment la tenue en tension à l'état non conducteur lorsqu'on vise la commande d'appareils alimentés sous 12 Volts, ainsi qu'une faible résistance à l'état conducteur.

Le transistor réalisant l'élément interrupteur supplémentaire, appelé treizième transistor peut être d'une taille inférieure aux autres transistors de puissance déjà cités du fait que le courant qui le traverse n'est pas aussi important.

Selon une variante avantageuse de mise en oeuvre de l'invention, une fonction de freinage du moteur de rotation du disque peut être réalisée pour laquelle la commande de conduction du treizième transistor est modulée pour réaliser d'abord une conduction à tension contrôlée pendant un temps nécessaire au retrait des têtes en position de sécurité, commande qui est ensuite modifiée pour placer ce transistor en forte conduction.

D'autres particularités de l'invention, détails et avantages seront mieux mis en évidence à la lecture de la description qui va suivre en regard des dessins annexés, le tout donné à titre d'exemples non limitatifs dans lesquels,
la figure 1 représente un schéma fonctionnel permettant de décrire les principaux circuits de contrôle et de commande de puissance d'un appareil de stockage d'informations conventionnel,
la figure 2 présente un schéma électrique du circuit intégré de commande de puissance selon l'invention,
la figure 3 est un schéma partiel du circuit de la figure 2, montrant une variante de mise en oeuvre de l'invention, et
la figure 4 est une vue en plan d'une pastille de semi-conducteur indiquant un exemple pratique de disposition des éléments interrupteurs de puissance correspondant au schéma de la figure 2.

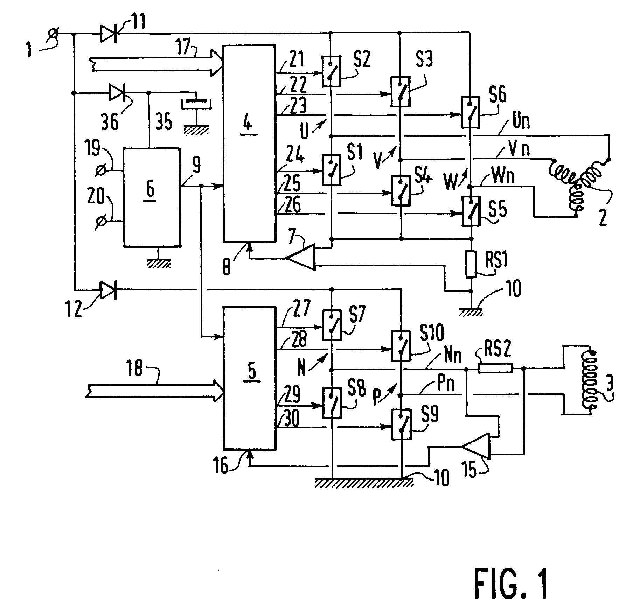

En se référant à la figure 1, les circuits de commande de puissance d'un appareil de stockage d'information conventionnel vont être brièvement décrits. A partir d'une ligne d'alimentation positive 1, à 12 Volts par exemple, un moteur de rotation de disque 2 et un actuateur 3 de déplacement de têtes de lecture-écriture sont activés par des étages de sortie en puissance en mode push-pull. Le moteur 2, de type triphasé sans balais, a ses trois phases alimentées par trois branches U, V et W de deux éléments interrupteurs en série, respectivement S1, S2 ; S3, S4 ; S5, S6. Les points milieux des éléments constitutifs des branches U, V et W sont notés respectivement Un, Vn et Wn.

L'étage de sortie en puissance formé des branches U, V et W est commandé par un circuit de contrôle 4 du moteur de rotation, de type analogique, fournissant par des liaisons 21 à 26 des signaux appropriés de commande aux éléments interrupteurs S1 à S6, de manière à assurer une vitesse de rotation déterminée du moteur 2.

La polarisation des phases vers la tension de référence 10 s'effectue via une résistance RS1 commune aux trois phases, résistance de faible valeur destinée à contrôler la valeur du courant traversant le moteur 2. La tension développée sur cette résistance 10, après amplification par un amplificateur 7, est appliquée à une entrée 8 du circuit de contrôle 4.

L'actuateur 3 de déplacement des têtes est alimenté par un autre étage de sortie en puissance de type en pont, formé de deux branches N et P chacune ayant deux éléments interrupteurs en série, S7, S8 ; S9, S10, respectivement. Les points milieux des éléments constituant les branches N et P sont notés respectivement Nn et Pn.

La polarisation de l'actuateur 3, opposée à la tension d'alimentation 1 se fait ici directement à la tension de référence 10. Cet autre étage de sortie est commandé par un circuit 5 dit de contrôle de l'actuateur de déplacement des têtes, également de type analogique. Il fournit par des liaisons 27 à 30 des signaux de commande appropriés pour le positionnement des têtes aux emplacements requis pour une lecture ou une écriture d'informations numériques sur le disque.

En série dans une connexion de l'actuateur 3, est insérée une autre résistance de contrôle RS2 aux bornes de laquelle le signal développé indiquant la valeur instantanée du courant traversant l'actuateur 3, est amplifié par un autre amplificateur 15 puis appliqué à une entrée 16 du circuit de contrôle 5.

En ce qui concerne le fonctionnement normal de l'appareil, c'est-à-dire en présence d'une tension d'alimentation nominale sur la ligne 1, des signaux de commande sont transmis au circuit de contrôle 4 par un ensemble de liaisons représentées en 17 ainsi qu'au circuit de contrôle 5 par un autre ensemble de liaison 18, à partir d'un circuit de gestion numérique, non représenté sur la figure.

Du fait que l'invention concerne plus spécifiquement la commande de puissance du moteur de rotation 2 et de l'actuateur 3 de déplacement des têtes, l'organisation détaillée du fonctionnement normal de l'appareil ne sera pas décrite alors qu'elle fait partie de l'art connu du spécialiste.

En cas de coupure de la tension d'alimentation cette tension chute très rapidement jusqu'à la tension de référence en raison de la consommation élevée de l'appareil. Il est actuellement d'usage courant d'assurer un retrait des têtes avant que le disque ne s'immobilise, vers une position de sécurité qui correspond à une zone du disque où aucune information n'est enregistrée et qui ne peut donc pas être endommagée par un contact des têtes sur la surface du disque lorsque celui-ci ralentit. Or il est nécessaire de disposer d'un courant substantiel pendant un temps suffisant pour garantir le retrait complet des têtes même dans le cas défavorable où celles-ci seraient accélérées dans une direction opposée au moment de la coupure d'alimentation.

Le moteur de rotation du disque est alors utilisé en générateur en profitant de son énergie cinétique. Pour réaliser cette fonction, il est le plus souvent nécessaire de prévoir un ou plusieurs dispositifs d'isolement tels que des diodes 11 et 12 pour éviter un retour du courant fourni par le moteur vers la ligne d'alimentation 1, qui est alors à zéro volt.

Un circuit superviseur d'alimentation 6 assure un changement de mode de fonctionnement des circuits de contrôle 4 et 5 dès qu'une chute de tension d'alimentation en dessous d'un seuil fixé est constatée. En pratique, deux signaux de changement de mode sont utilisés : l'un relatif à un seuil correspondant à la tension nominale de + 12 V, fourni au moyen d'une liaison 19 et l'autre relatif à un seuil correspondant à une tension nominale de + 5 V, dont le signal est fourni au moyen d'une liaison 20. Un ordre de changement de mode de fonctionnement est transis par le circuit superviseur 6 au moyen d'une liaison 9, commune pour les circuits de contrôle 4 et 5.

De manière à pouvoir assurer cette fonction alors que la tension de la ligne d'alimentation 1 chute très rapidement, le circuit superviseur 6 est alimenté de manière particulière à partir d'une capacité réservoir 35, chargée en mode normal par la ligne d'alimentation 1, à travers une diode anti-retour 36.

Le mode de fonctionnement assurant le retrait des têtes consiste essentiellement à commander tous les éléments interrupteurs S1 à S10 en position d'ouverture à l'exception de l'un d'eux, l'élément S9 par exemple. Dans ce mode particulier de fonctionnement, l'actuateur 3 est alors alimenté par des moyens appropriés qui seront plus spécialement décrits à l'aide des figures suivantes.

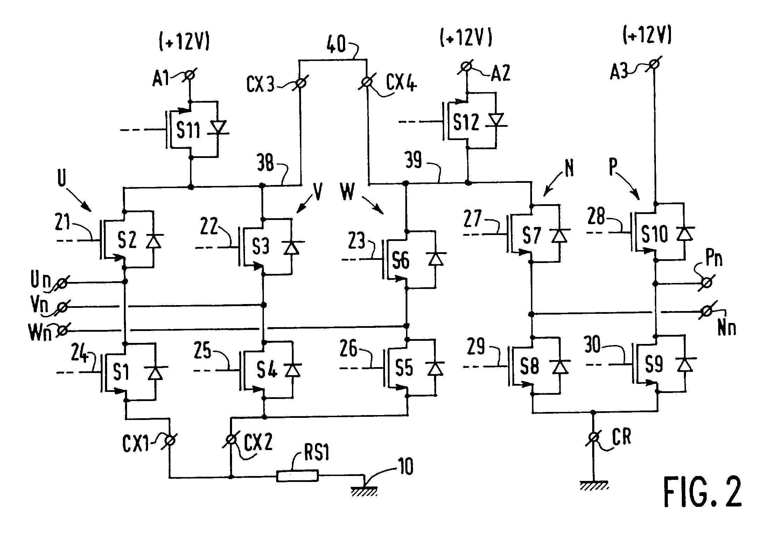

La figure 2 représente le schéma des éléments essentiels du circuit intégré selon l'invention. Ces éléments concernent plus particulièrement la commande de puissance du moteur de rotation du disque et de l'actuateur de déplacement des têtes. Conformément à la figure 1, six éléments interrupteurs S1 à S6 constituent l'étage de sortie en puissance pour l'alimentation du moteur de rotation, non représenté sur cette figure.

Ces éléments interrupteurs S1 à S6 sont de préférence des transistors de type DMOS à canal N, type de transistor le mieux adapté en pratique pour cette application. Quatre autres éléments interrupteurs S7 à S10, également des transistors de type DMOS constituent l'étage de sortie en puissance alimentant l'actuateur de déplacement des têtes, non représenté sur la figure. En conservant la même notation que sur la figure 1, ces éléments interrupteurs sont regroupés par paires formant trois branches U, V, W pour l'alimentation du moteur de rotation et 2 branches N et P pour l'alimentation de l'actuateur de déplacement des têtes. L'isolement nécessaire vis-à-vis de la tension d'alimentation +12 Volts est réalisé ici à l'aide de deux transistors DMOS S11 et S12 qui permettent de minimiser la chute de tension en série dans l'alimentation. Une commande de mise en conduction de ces transistors peut être fournie de manière simple par le circuit superviseur d'alimentation 6 représenté à la figure 1.

Le transistor de puissance S11 est disposé entre une première borne de tension d'alimentation A1 et les extrémités réunies des branches U et V formant un noeud de connexion 38 pour l'alimentation du moteur de rotation.

Le transistor S12 fonctionnant en tant que dispositif d'isolement est connecté entre une deuxième borne d'alimentation A2 et une extrémité de la branche W laquelle est également connectée par une ligne 39 à l'extrémité de la branche N. Une troisième borne de tension d'alimentation A3 est connectée directement à une extrémité de la branche P. L'autre extrémité de la branche N et l'autre extrémité de la branche P sont connectées ensemble à une borne de référence du circuit CR destinée à être connectée à la masse. L'autre extrémité de la branche U est connectée à une première borne de connexion du circuit CX1 et l'autre extrémité de la branche V réunie à l'autre extrémité de la branche W sont connectées ensemble à une deuxième borne de connexion CX2, ces première et deuxième bornes de connexion étant destinées à être soumise à une tension voisine de la tension de référence. A l'extérieur du circuit intégré ces bornes sont en effet connectées à la tension de référence à travers une résistance RS1 de mesure du courant du moteur de rotation.

On notera que dans cet agencement des transistors de puissance S1 à S10 ceux-ci forment une chaîne continue de transistors en cascade. Comme on le verra par la suite, cette disposition avantageuse permet de distribuer sans discontinuité ces transistors à la périphérie de la pastille de semi-conducteur sur laquelle le circuit est intégré. Les transistors S11 et S12 tenant lieu de dispositifs d'isolement en direction de la tension d'alimentation, alimentent respectivement les branches U, V d'une part et W et N d'autre part.

Dans un mode de réalisation préféré, le noeud 38 reliant le transistor S11 aux transistors S2 et S3 est connecté à une troisième borne de connexion CX3 tandis que le noeud 39 reliant le transistor S12 aux branches W et N est connecté à une quatrième borne de connexion CX4, bornes CX3 et CX4 qui sont destinées à être reliées entre elles par une liaison 40 extérieure au circuit intégré. De cette manière, l'alimentation en tension positive des branches U, V, W et N est réalisée à travers deux connexions et deux transistors interrupteurs S11 et S12 en parallèle ce qui réduit les exigences concernant les courants maximums imposés à ces transistors interrupteurs.

Selon la disposition du circuit représenté à la figure 2, on constate que les transistors S11 et S12 sont raccordés respectivement à un noeud seulement entre deux autres transistors, à savoir les transistors S2 et S3 d'une part, et les transistors S6 et S7 d'autre part. Cette propriété du circuit selon l'invention est avantageuse en ce qu'elle permet une disposition des connexions de sortie des transistors de puissance qui évite tout croisement et toute longueur prohibitive de ces connexions ce qui entraîneraient une résistance parasite indésirable.

En ce qui concerne le fonctionnement du circuit dans la phase opératoire correspondant au retrait des têtes en position de sécurité, on constate que les connexions aux trois enroulements du moteur de rotation par les points milieu des branches U, V et W respectivement Un, Vn et Wn, possèdent un trajet conducteur en direction des noeuds 38 et 39 du fait des diodes contenues de manière intrinsèque par les transistors DMOS S2, S3 et S6. En ce qui concerne les transistors S1, S4 et S5 au contraire, les diodes en parallèles sur ces transistors se trouvent polarisées en inverse et empêchent le retour vers la tension de référence des tensions produites par le moteur de rotation lorsqu'il fonctionne en générateur.

Les transistors S11 et S12 sont disposés avec leurs sources du côté des bornes d'alimentation A1, respectivement A2 de sorte que les diodes intrinsèques en parallèle sur ces transistors isolent les noeuds 38 et 39 des bornes d'alimentation A1 et A2. Une tension positive ondulée apparaît donc sur les noeuds 38 et 39 qui sont rappelons-le connectés ensemble par la liaison 40. L'alimentation de l'actuateur de déplacement des têtes à partir du noeud intermédiaire Nn de la branche N peut être réalisée en prévoyant la commande du transistor S7 en conduction permettant le transport d'une énergie récupérée sur le noeud 39 sous forme de courant vers l'actuateur de déplacement des têtes. Le transistor S9 est lui-même commandé en conduction pour le retour de ce courant vers la tension de référence. Cette manière d'alimenter l'actuateur de déplacement des têtes dans la phase de retrait en position de sécurité implique une double commande du transistor S7 selon que l'on est en phase normale de fonctionnement ou en phase de retrait des têtes en position de sécurité.

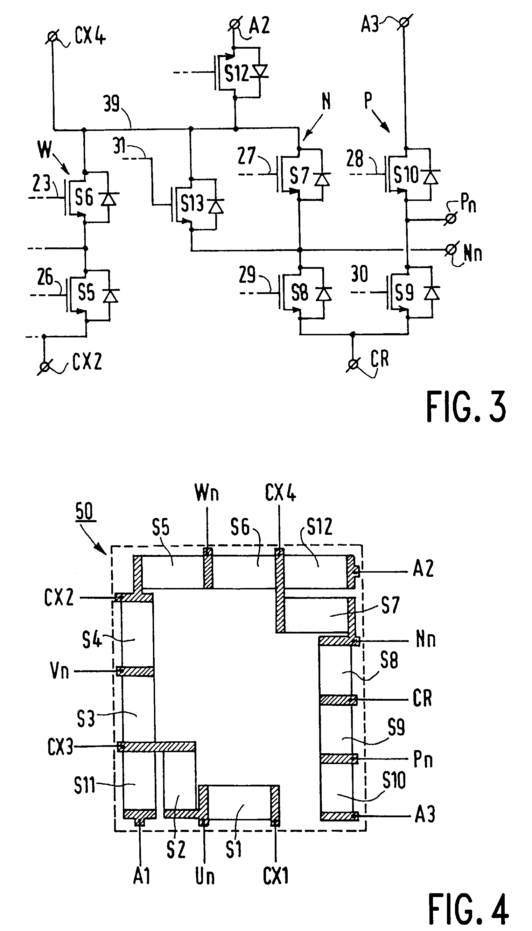

Pour éviter une telle complication, on peut prévoir selon l'invention une disposition plus simple par laquelle un transistor supplémentaire S13, également de type DMOS à canal N, mais d'une surface inférieure aux autres transistors de puissance étant donné les courants plus faibles mis en jeu dans ce transistor, est prévu pour assurer la conduction le moment venu entre le noeud 39 et le noeud Nn intermédiaire de la branche N. Cette disposition est montrée à la figure 3 qui reprend la partie de la figure 2 qui est concernée par les transistors S5 à S10, et par le transistor S12.

Selon ce mode de mise en oeuvre, la commande du transistor S7 au moment du retrait des têtes est une commande de mise hors conduction, alors que la commande du transistor supplémentaire S13 provenant d'une liaison 31 au circuit de contrôle 4 du moteur de rotation (figure 1) est une commande de conduction uniquement pendant le retrait des têtes jusqu'à l'immobilisation du disque. Dans une variante avantageuse, il est prévu que la commande du transistor S13 soit modulée pour réaliser dans un premier temps une conduction à tension contrôlée pendant un temps minimal nécessaire au retrait des têtes en position de sécurité après quoi cette commande est modifiée pour placer le transistor en forte conduction réalisant ainsi un freinage du moteur de rotation.

La figure 4 présente une vue très schématique en plan d'une pastille de semi-conducteur 50 sur laquelle sont disposés les transistors de puissance S1 à S10, ces transistors, comme on peut le constater sont connectés les uns aux autres régulièrement en formant une chaîne continue dans laquelle les connexions sont d'une longueur minimale. Sur cette chaîne se greffe les transistors S11 et S12 servant d'élément d'isolement qui sont disposés de préférence dans un angle de la pastille semi-conductrice de manière à minimiser encore la longueur des connexions mises en oeuvre pour l'accès conditionnel de la tension d'alimentation au reste de la chaîne de transistors.

Comme on peut le constater la disposition du circuit selon l'invention permet une distribution optimale des transistors à la périphérie du circuit, emplacement où ces transistors sont susceptibles d'offrir le minimum de résistance parasite dans les différentes boucles d'alimentation du circuit selon l'invention.

## Revendications

1. Circuit intégré de commande d'un appareil de stockage d'informations, à disque rotatif, circuit assurant entre-autres à partir d'une tension d'alimentation et d'une tension de référence une commande séquentielle des phases d'un moteur triphasé sans balais, qui entraîne le disque en rotation, ainsi qu'une commande de positionnement d'un actuateur de déplacement de tête(s) de lecture-écriture du disque, circuit comportant une pluralité d'éléments interrupteurs de puissance distribués à la périphérie d'une pastille de semi-conducteur sur laquelle est intégré ledit circuit, éléments disposés de manière à former :
trois branches U, V, W, chacune de deux éléments interrupteurs en série, qui alimentent par les noeuds intermédiaires aux dits éléments de ces branches, chacune des phases du moteur de rotation,
et deux branches P et N chacune de deux éléments interrupteurs en série, qui alimentent par les noeuds intermédiaires aux dits éléments de ces branches, l'actuateur de déplacement de têtes,
lequel circuit est muni en outre d'au moins un dispositif d'isolement connecté entre la tension d'alimentation et une branche d'éléments interrupteurs, pour permettre un retrait des têtes en position de sécurité en cas de coupure de la tension d'alimentation, l'actuateur de déplacement de tête(s) étant alors alimenté à partir de l'énergie électrique fournie par le moteur de rotation du disque, caractérisé en ce que :
- un onzième élément interrupteur fonctionnant en tant que dispositif d'isolement est connecté entre d'une part une première borne de tension d'alimentation et d'autre part les extrémités réunies des deux branches dites U et V,
- un douzième élément interrupteur fonctionnant en tant que dispositif d'isolement est connecté entre une deuxième borne de tension d'alimentation et une extrémité de la branche dite W, réunie à une extrémité de la branche dite N,
- une troisième borne de tension d'alimentation est connectée directement à une extrémité de la branche restante dite branche P,
- l'autre extrémité de la branche N et l'autre extrémité de la branche P sont connectées ensemble à une borne de référence du circuit,
- l'autre extrémité de la branche dite U est connectée à une première borne de connexion du circuit tandis que l'autre extrémité de la branche V et l'autre extrémité de la branche W sont connectées ensemble à une deuxième borne de connexion du circuit, lesquelles première et deuxième bornes de connexion sont destinées à être soumises à une tension voisine de la tension de référence.

2. Circuit intégré selon la revendication 1, caractérisé en ce que le noeud reliant le onzième élément interrupteur aux branches dites U et V est connecté à une troisième borne de connexion du circuit et le noeud reliant le douzième élément interrupteur aux branches dites W et N est connecté à une quatrième borne de connexion du circuit laquelle est destinée à être connectée à la troisième borne de connexion par une liaison externe au circuit intégré.

3. Circuit intégré selon la revendication 2, caractérisé en ce que le noeud de connexion entre le douzième élément interrupteur avec les extrémités réunies des branches W et N est relié au noeud intermédiaire aux éléments de la branche dite N via le trajet de courant d'un élément interrupteur supplémentaire soumis à une commande déterminant sa conduction uniquement pendant le retrait des têtes et jusqu'à l'immobilisation du disque.

4. Circuit intégré selon l'une des revendications 1 à 3, caractérisé en ce que les éléments interrupteurs sont des transistors de type DMOS à canal N.

5. Circuit intégré selon la revendication 4, caractérisé en ce que le transistor réalisant l'élément interrupteur supplémentaire, dit treizième transistor reçoit une commande de conduction modulée pour réaliser d'abord une conduction à tension contrôlée pendant un temps nécessaire au retrait des têtes en position de sécurité, après quoi cette commande est modifiée pour placer ce transistor en forte conduction entraînant un freinage du moteur de rotation du disque.
